# NOUVEAU FASCICULE DE BREVET EUROPEEN

(11) **EP 2 052 917 B2**
(45) Date de publication et mention de la décision concernant l'opposition: **13.09.2017**
(45) Mention de la délivrance du brevet: 07.07.2010
(21) Numéro de dépôt: 08305621.8
(22) Date de dépôt: 30.09.2008
(51) Int. Cl.: B60R 19/04, B60R 19/18, B60R 19/24

(54) **Traverse pour structure avant et/ou arrière de véhicule automobile**
Querträger für Front- oder Heckblock eines Kraftfahrzeugs
Crossmember for front and/or rear automobile structure

(30) Priorité: 24.10.2007 FR 0707472
(43) Date de publication de la demande: 29.04.2009
(73) Titulaire: Renault S.A.S., 92100 Boulogne-Billancourt (FR)
(72) Inventeur: Delord, Christian, 93320, Pavillon sous Bois (FR)
(74) Mandataire: Novaimo

(56) Documents cités:
- EP-A1- 1 342 624
- EP-A1- 1 454 799
- EP-A1- 1 645 476
- EP-A1- 1 733 927
- EP-A2- 1 894 791
- WO-A1-2008/061824
- DE-A1- 2 625 724
- DE-A1- 3 134 715
- DE-A1- 10 143 890
- DE-A1- 10 149 748
- DE-A1- 10 239 592
- DE-A1- 10 354 723
- DE-A1- 19 511 868
- DE-A1- 19 631 901
- DE-A1- 19 744 274
- DE-A1- 19 934 141
- DE-A1- 19 958 887
- DE-A1-102004 010 792
- DE-A1-102005 017 956
- DE-T2- 60 008 791
- DE-T2- 60 301 358
- DE-T2- 69 201 797
- US-A1- 2004 262 930
- US-B1- 6 179 355
- US-B2- 6 948 749

## Description

L'invention concerne la structure d'une partie avant ou arrière d'un véhicule automobile. Elle concerne plus particulièrement une traverse d'une telle structure avant ou arrière adaptée pour les situations de choc piéton. Elle concerne aussi un agencement de la partie avant ou arrière d'un véhicule automobile intégrant une telle traverse et un véhicule automobile en tant que tel équipé d'un tel agencement. Enfin, elle concerne un procédé de fabrication d'une traverse.

La structure des parties avant et/ou arrière d'un véhicule automobile a pour fonction de traiter trois types de chocs. Les petits chocs dits « piétons » qui génèrent peu d'énergie à absorber, les chocs plus violents mais à faible vitesse dits chocs « Danner » pour lesquels l'objectif est d'obtenir un minimum de déformation de la structure, puis les chocs plus extrêmes dits « crash », qui entraînent des déformations importantes du véhicule et pour lesquels l'objectif est la protection de l'habitacle pour épargner les passagers.

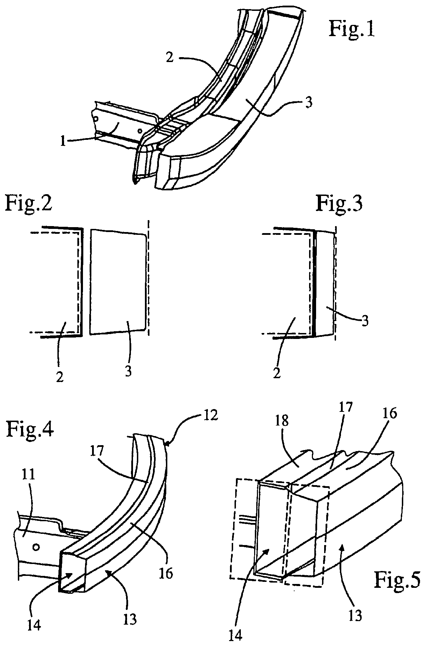

Pour répondre à ces différentes situations, une structure classique avant ou arrière d'un véhicule automobile, illustrée sur les figures 1 à 3, repose sur deux longerons 1 latéraux s'étendant dans la direction longitudinale avant-arrière du véhicule automobile, à l'extrémité desquels s'étend une traverse 2. Cette traverse est destinée à absorber toute l'énergie des chocs « Danner », laissant intacts les longerons 1, qui ne se déforment que lors des crashs pour protéger l'habitacle. Pour répondre aux chocs « piétons », il est usuel de disposer un matériau mou comme de la mousse 3 sur l'avant de la traverse, fixé sur la traverse Danner par exemple par clipsage. Enfin, un bouclier, non représenté, est fixé de sorte de recouvrir ces éléments, et s'étend depuis la partie avant ou arrière de cette structure jusque sur sa face supérieure où il vient en liaison avec le reste du véhicule, en général le capot à l'avant et le coffre à l'arrière, pour obtenir un aspect esthétique attrayant de la partie avant ou arrière du véhicule vu depuis l'extérieur. En variante, le matériau en mousse est remplacé par d'autres éléments fixés sur la traverse Danner par des soudures pour absorber les chocs piétons. Dans tous les cas, ces structures représentent un encombrement et un coût non satisfaisants.

Le document US6179355 propose aux figures 2B et 3 une traverse composée d'une première partie rigide 16 et d'une deuxième partie rigide 18, les deux parties étant distinctes. Ledit document US couvre les particularités du préambule de la revendication 1.

Il existe donc un besoin d'une structure avant ou arrière de véhicule automobile améliorée, représentant un compromis optimisé pour répondre aux contraintes mécaniques, esthétiques et économiques s'imposant aux véhicules automobiles.

A cet effet, l'invention repose sur une traverse pour structure avant et/ou arrière de véhicule automobile, comprenant une première partie rigide destinée à répondre aux chocs « Danner », **caractérisée en ce qu**'elle comprend aussi une seconde partie dédiée aux chocs piétons, les deux parties formant un seul élément indissociable.

La première partie arrière se présente sous la forme d'un U couché ouvert vers l'avant et la seconde partie avant se présente sous la forme d'un U couché ouvert vers l'arrière, les branches horizontales des deux formes en U étant liées entre elles.

Selon un mode d'exécution, la traverse peut présenter une section fermée, la première partie correspondant à la partie arrière et la seconde partie correspondant à la partie antérieure.

La première partie peut présenter une grande épaisseur et la seconde partie une petite épaisseur.

La seconde partie sous la forme d'un U peut présenter une paroi verticale antérieure, subissant directement les chocs contre un éventuel obstacle et deux parties sensiblement horizontales, légèrement inclinées pour s'écarter l'une de l'autre vers l'arrière.

Selon une variante, la partie arrière peut présenter une paroi intermédiaire comprenant une petite partie légèrement avancée par rapport au reste de sa paroi sensiblement verticale.

Selon une autre variante, la seconde partie peut être telle qu'elle est apte à se déformer et à venir se loger sensiblement entièrement au sein du volume de la première partie en cas de choc piéton.

L'invention porte aussi sur un agencement d'une structure avant et/ou arrière d'un véhicule automobile comprenant deux longerons latéraux sur lesquels est montée une traverse recouverte par un bouclier, caractérisé en ce que la traverse se présente sous la forme d'une seule pièce indissociable telle que décrite précédemment pour répondre à la fois aux chocs piétons et Danner.

L'invention porte aussi sur un véhicule automobile **caractérisé en ce qu**'il comprend une traverse dans sa structure avant et/ou arrière telle que décrite précédemment.

Enfin, l'invention porte aussi sur un procédé de fabrication d'une traverse pour structure avant et/ou arrière de véhicule automobile **caractérisé en ce qu**'il comprend une étape de profilage ou d'extrusion de la traverse comprenant une première partie rigide destinée à répondre aux chocs « Danner » et une seconde partie indissociable dédiée aux chocs piétons.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue en perspective partielle de dessus d'une structure avant ou arrière d'un véhicule automobile selon l'état de la technique ;
la figure 2 représente une vue en coupe de la section de la structure selon l'état de la technique ;
la figure 3 représente une vue en coupe de la section de la structure selon l'état de la technique compressée par un choc piéton ;
la figure 4 représente une vue en perspective partielle de la structure avant ou arrière d'un véhicule automobile selon un mode d'exécution de l'invention ;
la figure 5 représente une vue agrandie de détails de la structure selon le mode d'exécution de l'invention ;
la figure 6 représente une vue en coupe de la section de la structure selon le mode d'exécution de l'invention ;
la figure 7 représente une vue en coupe de la section de la structure selon l'invention compressée par un choc piéton ;
la figure 8 représente une vue en coupe d'une variante de la section de la structure selon le mode d'exécution de l'invention ;
la figure 9 représente une vue en coupe de la section de la variante de la structure selon l'invention compressée par un choc piéton.

L'invention repose sur une même traverse 12 qui regroupe les deux fonctions techniques de traitement des chocs piétons et Danner. Pour cela, la traverse 12 comprend une partie antérieure 13 dédiée à la gestion des chocs piétons et une partie arrière 14 pour les chocs Danner. Cette traverse 12 est montée sur les longerons latéraux 11.

Selon le mode d'exécution de la traverse 12, illustré sur les figures 4 à 7, les deux parties 13, 14 de la traverse se présentent sous la forme d'un U couché, les deux U se faisant face de sorte de former un corps creux fermé. La partie antérieure 13 se présente sous la forme d'un U de plus petite dimension, présentant une face antérieure sensiblement verticale 15 et deux branches arrière 16 sensiblement horizontales, liées par une partie inclinée 17 aux deux branches sensiblement horizontales 18 de la partie arrière 14, se terminant par une paroi verticale 19.

L'ensemble de la traverse est en métal dont l'épaisseur varie. La partie antérieure 13, destinée à l'absorption de petits chocs piétons, présente des parois 15, 16 de faible épaisseur, alors que la partie arrière, destinée à absorber des chocs plus importants, comprend une plus grande épaisseur.

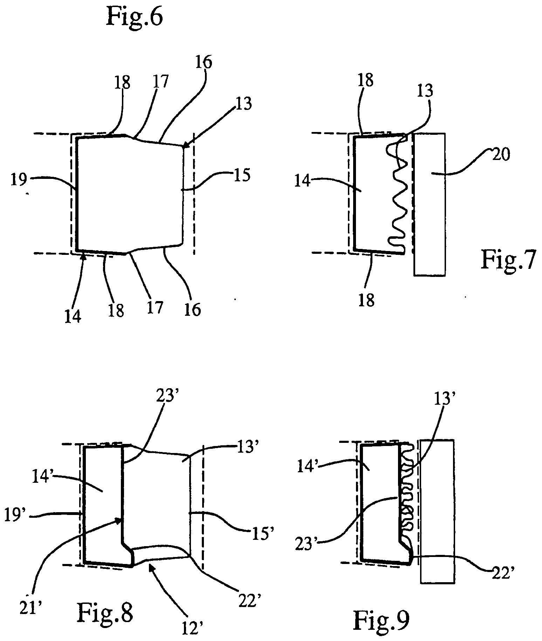

La figure 7 illustre le comportement de la partie antérieure 13 de la traverse 12 dans une situation de choc piéton, contre un obstacle 20. Les branches 16 sensiblement horizontales, de pente légèrement inclinée pour se rapprocher l'une de l'autre vers l'avant de la traverse, s'effacent complètement en se repliant vers l'intérieur de la traverse en cas de choc, l'intégralité de la partie antérieure 13 se trouvant pliée à l'intérieur du corps creux de la traverse, entre les deux branches 18 de la partie arrière plus rigide 14, qui ne se déforme pas dans ce type de choc léger.

L'absorption d'énergie du choc piéton se caractérise donc par la déformation de la partie antérieure 13 en tôle.

Les figures 8 et 9 illustrent une variante d'exécution dans laquelle la partie arrière 14' de la traverse 12' comprend en outre une tôle intermédiaire 21', sensiblement parallèle aux parois sensiblement verticales 19', 15', respectivement de la partie arrière 14' et de la partie avant 13' de la traverse 12'. Cette tôle intermédiaire 21' forme deux chambres dans la structure fermée de la traverse 12' et renforce ainsi sa raideur. Elle présente une petite partie inférieure 22' plus en avant du reste 23' de cette paroi. Lors d'un choc piéton, illustré sur la figure 9, la partie antérieure 13' vient se déformer en appui contre la tôle intermédiaire 21', qui sert de butée. Toute la matière de cette partie antérieure 13' vient se loger en arrière de la partie antérieure 22' de cette tôle intermédiaire, contre la surface 23' plus en retrait.

Dans les deux variantes illustrées sur les figures 6 à 9, les deux parties antérieures 13, 13' s'effacent complètement au sein de la structure de la traverse 12' dans leur configuration d'absorption maximale d'un choc. A la fin de cette absorption, les traverses présentent alors un encombrement correspondant au seul volume de leurs parties arrière 14, 14'. En remarque, l'élément 3 d'absorption des chocs piéton de l'état de la technique conserve un résidu incompressible après sa compression suite à un choc piéton, comme illustré sur la figure 3. Une telle solution de l'état de la technique exige donc globalement un encombrement plus important dans la direction longitudinale pour obtenir une absorption d'énergie équivalente par déformation.

La traverse peut présenter d'autres formes, de section fermée. Pour augmenter sa raideur, il est possible d'augmenter le nombre de chambres. La traverse 12, 12' selon l'invention peut être fabriquée par profilage, par exemple pour des traverses en acier, ou par extrusion, par exemple pour des traverses en aluminium.

La solution décrite atteint donc bien les objets recherchés et présente les avantages supplémentaires suivants :
- elle présente un encombrement réduit dans la direction longitudinale, pour une réponse mécanique aux chocs piétons équivalente à l'état de la technique ;
- elle comporte une seule pièce répondant aux chocs les plus nombreux dits piétons et Danner, ce qui simplifie le montage des structures avant ou arrière de véhicules automobiles et réduit les coûts de fabrication, par rapport à l'état de la technique qui consiste en l'assemblage de plusieurs éléments distincts.

## Revendications

1. Traverse pour structure avant et/ou arrière de véhicule automobile, comprenant une première partie rigide (14 ; 14') destinée à répondre aux chocs « Danner », **caractérisée en ce qu'**elle comprend aussi une seconde partie (13 ; 13') dédiée aux chocs piétons, les deux parties (13, 14 ; 13', 14') formant un seul élément indissociable, la première partie (14; 14') arrière se présentant sous la forme d'un U couché ouvert vers l'avant et la seconde partie (13; 13') avant se présentant sous la forme d'un U couché ouvert vers l'arrière, les branches horizontales des deux formes en U étant liées entre elles.

2. Traverse pour structure avant et/ou arrière de véhicule automobile selon la revendication 1, **caractérisée en ce que** la traverse (12 ; 12') présente une section fermée, la première partie (14; 14') correspondant à la partie arrière et la seconde partie (13 ; 13') correspondant à la partie antérieure.

3. Traverse pour structure avant et/ou arrière de véhicule automobile selon la revendication 2, **caractérisée en ce que** la première partie (14 ; 14') présente une grande épaisseur et la seconde partie (13; 13') une petite épaisseur.

4. Traverse pour structure avant et/ou arrière de véhicule automobile selon l'une des revendications précédentes, **caractérisée en ce que** la seconde partie (13; 13') sous la forme d'un U présente une paroi verticale (15) antérieure, subissant directement les chocs contre un éventuel obstacle (20; 20') et deux parties sensiblement horizontales (16), légèrement inclinées pour s'écarter l'une de l'autre vers l'arrière.

5. Traverse pour structure avant et/ou arrière de véhicule automobile selon l'une des revendications précédentes, **caractérisée en ce que** la partie arrière (14') présente une paroi intermédiaire (21') comprenant une petite partie légèrement avancée (22') par rapport au reste de sa paroi sensiblement verticale (23').

6. Traverse pour structure avant et/ou arrière de véhicule automobile selon l'une des revendications précédentes, **caractérisée en ce que** la seconde partie (13; 13') est telle qu'elle est apte à se déformer et à venir se loger sensiblement entièrement au sein du volume de la première partie (14; 14') en cas de choc piéton.

7. Agencement d'une structure avant et/ou arrière d'un véhicule automobile comprenant deux longerons latéraux (11) sur lesquels est montée une traverse (12, 12') recouverte par un bouclier, **caractérisé en ce que** la traverse (12, 12') se présente sous la forme d'une seule pièce indissociable selon une des revendications précédentes pour répondre à la fois aux chocs piétons et Danner.

8. Véhicule automobile, **caractérisé en ce qu'**il comprend une traverse dans sa structure avant et/ou arrière selon une des revendications 1 à 6.

9. Procédé de fabrication d'une traverse pour structure avant et/ou arrière de véhicule automobile **caractérisé en ce qu'**il comprend une étape de profilage ou d'extrusion de la traverse comprenant une première partie rigide (14 ; 14') destinée à répondre aux chocs « Danner » et une seconde partie (13 ; 13') indissociable dédiée aux chocs piétons.

## Patentansprüche

1. Querträger für Front- und/oder Heckblock eines Kraftfahrzeugs mit einem starren ersten Teil (14; 14'), das zur Reaktion auf Stadtaufpralle bestimmt ist, **dadurch gekennzeichnet, dass** er auch einen zweiten Teil (13; 13') für Fußgängeraufpralle umfasst, wobei die beiden Teile (13, 14; 13', 14') ein einziges untrennbares Element bilden, wobei der erste hintere Teil (14; 14') die Form eines liegenden, nach vorne offenen U, aufweist, und der zweite vordere Teil (13; 13') die Form eines liegenden, nach hinten offenen U, aufweist, wobei die horizontalen Schenkel der beiden U-Formen miteinander verbunden sind.

2. Querträger für Front- und/oder Heckblock eines Kraftfahrzeugs nach Anspruch 1, **dadurch gekennzeichnet, dass** der Querträger (12; 12') ein geschlossenes Profil aufweist, wobei der erste Teil (14; 14') dem hinteren Teil und der zweite Teil (13; 13') dem vorderen Teil entspricht.

3. Querträger für Front- und/oder Heckblock eines Kraftfahrzeugs nach Anspruch 2, **dadurch gekennzeichnet, dass** der erste Teil (14; 14') eine große Dicke und der zweite Teil (13; 13') eine geringe Dicke aufweist.

4. Querträger für Front- und/oder Heckblock eines Kraftfahrzeugs nach einem der vorhergehenden Ansprüche, **dadurch gekennzeichnet, dass** der zweite U-förmige Teil (13; 13') eine vordere vertikale Wand (15), auf die die Aufpralle auf ein eventuelles Hindernis (20; 20') direkt einwirken, und zwei im Wesentlichen horizontale Teile (16) aufweist, die leicht geneigt sind, so dass sie nach hinten auseinandergehen.

5. Querträger für Front- und/oder Heckblock eines Kraftfahrzeugs nach einem der vorhergehenden Ansprüche, **dadurch gekennzeichnet, dass** der hintere Teil (14') eine Zwischenwand (21') aufweist, die einen kleinen Teil (22') umfasst, der gegenüber seiner restlichen, im Wesentlichen vertikalen Wand (23') leicht vorsteht.

6. Querträger für Front- und/oder Heckblock eines Kraftfahrzeugs nach einem der vorhergehenden Ansprüche, **dadurch gekennzeichnet, dass** der zweite Teil (13; 13') derart ist, dass er sich bei einem Fußgängeraufprall verformen und im Wesentlichen ganz im Volumen des ersten Teils (14; 14') einlagern kann.

7. Anordnung eines Front- und/oder Heckblocks eines Kraftfahrzeugs mit zwei seitlichen Längsträgern (11), an denen ein mit einer Stoßleiste überzogener Querträger (12, 12') montiert ist, **dadurch gekennzeichnet, dass** der Querträger (12, 12') die Form eines einzigen untrennbaren Elements nach einem der vorhergehenden Ansprüche hat, um sowohl auf Fußgängerals auch auf Stadtaufpralle zu reagieren.

8. Kraftfahrzeug, **dadurch gekennzeichnet, dass** es in seinem Front- und/oder Heckblock einen Querträger nach einem der Ansprüche 1 bis 6 umfasst.

9. Herstellungsverfahren eines Querträgers für Front- und/oder Heckblock eines Kraftfahrzeugs, **dadurch gekennzeichnet, dass** es einen Schritt des Profilierens oder Extrudierens des Querträgers umfasst, der einen starren ersten Teil (14; 14') zur Reaktion auf Stadtaufpralle und einen untrennbar verbundenen zweiten Teil (13; 13') zur Reaktion auf Fußgängeraufpralle umfasst.

## Claims

1. Crossmember for front and/or rear motor vehicle structure, comprising a first part (14; 14') which is rigid and is designed to handle "Danner" impacts, which crossmember is **characterized in that** it also comprises a second part (13; 13') specifically for pedestrian impacts, the two parts (13, 14; 13', 14') forming a single indissociable component, the first rear part (14; 14') taking the form of a sideways U which is open towards the front and the second front part (13; 13') taking the form of a sideways U which is open towards the rear, the horizontal arms of the two U shapes being joined together.

2. Crossmember for front and/or rear motor vehicle structure according to Claim 1, **characterized in that** the crossmember (12; 12') has a closed cross section, the first part (14; 14') corresponding to the rear part and the second part (13; 13') corresponding to the front part.

3. Crossmember for front and/or rear motor vehicle structure according to Claim 2, **characterized in that** the first part (14; 14') is thick and the second part (13; 13') is thin.

4. Crossmember for front and/or rear motor vehicle structure according to one of the preceding claims, **characterized in that** the second U-shaped part (13; 13') has a vertical front wall (15) that directly receives any impacts with an obstacle (20; 20') and having two approximately horizontal parts (16), inclined slightly so as to diverge from each other in the rearwards direction.

5. Crossmember for front and/or rear motor vehicle structure according to one of the preceding claims **characterized in that** the rear part (14') has an intermediate wall (21') comprising a small part (22') slightly forward of the rest of its generally vertical wall (23').

6. Crossmember for front and/or rear motor vehicle structure according to one of the preceding claims, **characterized in that** the second part (13; 13') is such that it is able to deform and fit more or less completely in the volume of the first part (14; 14') in a pedestrian impact.

7. Arrangement of a front and/or rear structure of a motor vehicle comprising two lateral longitudinal members (11) supporting a crossmember (12, 12') covered by an apron, said arrangement being **characterized in that** the crossmember (12, 12') takes the form of a single indissociable component according to one of the preceding claims for handling both pedestrian and Danner impacts.

8. Motor vehicle **characterized in that** it includes a crossmember in its front and/or rear structure according to one of Claims 1 to 6.

9. Method for manufacturing a crossmember for a front and/or rear structure of a motor vehicle, **characterized in that** it includes a step of profiling or extruding the crossmember that comprises a first part (14; 14') which is rigid and is designed to handle "Danner" impacts, and a second part (13; 13') which is indissociable and is specifically for pedestrian impacts.
